# EUROPÄISCHE PATENTSCHRIFT

(11) **EP 3 537 180 B1**
(45) Veröffentlichungstag und Bekanntmachung des Hinweises auf die Patenterteilung: **15.12.2021**
(21) Anmeldenummer: 19156472.3
(22) Anmeldetag: 11.02.2019
(51) Int. Cl.: G01S 7/4865, G01S 7/481, G01S 7/4863, G01S 17/931

(54) **EMPFÄNGERANORDNUNG ZUM EMPFANG VON LICHTIMPULSEN, LIDAR-MODUL UND VERFAHREN ZUM EMPFANGEN VON LICHTIMPULSEN**
RECEIVER FOR RECEIVING LIGHT PULSES, LIDAR MODULE AND METHOD FOR RECEIVING LIGHT PULSES
DISPOSITIF RÉCEPTEUR PERMETTANT DE RECEVOIR DES IMPULSIONS LUMINEUSES, MODULE LIDAR ET PROCÉDÉ DE RÉCEPTION DES IMPULSIONS LUMINEUSES

(30) Priorität: 08.03.2018 DE 102018203534
(43) Veröffentlichungstag der Anmeldung: 11.09.2019
(73) Patentinhaber: Ibeo Automotive Systems GmbH, 22143 Hamburg (DE)
(72) Erfinder: Beuschel, Ralf, 88239 Wangen (DE); Kabuk, Ünsal, 22143 Hamburg (DE)
(74) Vertreter: RGTH

(56) Entgegenhaltungen:
- WO-A1-2018/122560
- WO-A2-2018/140522
- US-A1- 2017 052 065
- KOTA ITO ET AL: "System Design and Performance Characterization of a MEMS-Based Laser Scanning Time-of-Flight Sensor Based on a 256 x 64-pixel Single-Photon Imager", IEEE PHOTONICS JOURNAL, IEEE, USA, Bd. 5, Nr. 2, 1. April 2013 (2013-04-01), Seite 6800114, XP011510713, ISSN: 1943-0655, DOI: 10.1109/JPHOT.2013.2247586

## Beschreibung

Die Erfindung betrifft eine Empfängeranordnung zum Empfang von Lichtimpulsen bzw. ein LiDAR-Modul bzw. ein Verfahren zum Empfangen von Lichtimpulsen nach der Gattung der unabhängigen Patentansprüche.

Aus US 9,268,012 B2 ist eine Vorrichtung und ein Verfahren für die dreidimensionale Erfassung von Objekten mittels eines zweidimensionalen planaren Laserfeldes möglich. Dabei können in diesem Laserfeld auch Gruppen von einzelnen Lasern verwendet werden. Diese Laser sind sogenannte VCSEL (vertical cavity surface emitting lasers) und werden üblicherweise aus Halbleitern hergestellt werden. Eine entsprechende Optik ist offenbart, die die Laserstrahlen parallelisiert. Weiterhin werden Photodetektoren verwendet, die in zufälligen oder regulären Mustern angeordnet sind. Vor den Photodetektoren ist ein Mikrolinsenarray angeordnet, sodass jeder Photodetektor mit einer entsprechenden Mikrolinse korrespondiert. Solche Mikrolinsen sind auch vor dem Laserfeld angeordnet.

WO 2018/140522 A2 offenbart einen SPAD Detektor mit einer modulierten Empfindlichkeit, während WO 2018/122560 A1 eine Sensorvorrichtung zur Detektion von Photonen betrifft.

In US 2017/0052065 A1 wird eine Sensoreinrichtung umfassend mindestens einen Array von Sensorelementen offenbart.

Kota Ito et al, "System Design and Performance Characterization of a MEMS-Based Laser Scanning Time-of-Flight Sensor Based on a 256 x 64-pixel Single-Photon Imager" betrifft einen Time-of-Flight Sensor.

Die erfindungsgemäße Empfängeranordnung zum Empfang von Lichtimpulsen bzw. das LiDAR-Modul bzw. das Verfahren zum Empfang von Lichtimpulsen mit den Merkmalen der unabhängigen Patentansprüche haben demgegenüber den Vorteil, dass eine an den lichtempfindlichen Empfänger angeschlossene Auswerteschaltung aus dem elektrischen Signal, das von dem Empfänger stammt, mittels zeitkorrelierter Photonenzählung mit wenigstens einem Histogramm über eine Flugzeit der Lichtimpulse eine Entfernung zwischen der Empfängeranordnung und wenigstens einem Objekt, das die Lichtimpulse reflektiert, bestimmt. Dabei wird auch ein Startsignal für die Emission der Lichtimpulse verwendet, um den Startzeitpunkt für die Flugzeit zu bekommen. Die Auswerteschaltung wird ab zumindest einer vorbestimmten Entfernung eine Senkung einer Auflösung der Entfernungsbestimmung vornehmen.

Durch die Verwendung der zeitkorrelierten Photonenzählung ist eine sehr genaue Entfernungsbestimmung möglich, und die Absenkung der Auflösung der Entfernungsbestimmung führt dazu, dass die Anforderung an Speicherplatz für das Histogramm verringert wird und somit geringere Kosten und Aufwand anfallen.

Die Absenkung der Entfernungsbestimmung bspw. um den Faktor 2 führt zu einer Unsicherheit in wenigen Zentimetern, die ab einer Entfernung bspw. von 100 oder 150 Metern durchaus verkraftbar ist und bspw. keine Nachteile bzgl. der Bestimmung eines Objekts für eine mögliche Kollision darstellt. Die Empfängeranordnung bzw. das LiDAR-Modul bzw. das erfindungsgemäße Verfahren sind insbesondere für die Verwendung in Fahrzeugen gedacht. Die LiDAR-Technik hat sich hier als besonders geeignet erwiesen, um bspw. in Kombination mit anderen Umfeldsensoren wie Videokamera, Radar und/oder Ultraschall eine genaue Objektklassifizierung und Entfernungsbestimmung vorzunehmen.

Bei der Empfängeranordnung handelt es sich um eine solche, um Lichtimpulse insbesondere Laserimpulse zu empfangen, die von Objekten im Umfeld bspw. eines Fahrzeugs reflektiert wurden. Damit ist dann die Identifikation bzw. Charakterisierung dieser Objekte und insbesondere zumindest eine Entfernungsbestimmung möglich. Die Empfängeranordnung kann als ein Modul eingebaut werden bspw. in ein Fahrzeug. Es kann aber auch sein, dass die Empfängeranordnung aus verschiedenen Teilen besteht, die getrennt ins Fahrzeug eingebaut werden und dann erfindungsgemäß zusammenwirken und entsprechend verbunden werden.

Bei den Lichtimpulsen handelt es sich, wie bereits erwähnt, üblicherweise um Laserimpulse, die von einer Senderschaltung mit bspw. einem Laserfeld oder Laserarray ausgegeben werden. Damit ist dann insbesondere möglich, die Entfernung über die sogenannte Flugzeit (time of flight) zu bestimmen, weil die Flugzeit der doppelten Entfernung entspricht, die das Licht von der Empfängeranordnung zum Objekt und wieder zurück benötigt. Diese Lichtimpulse üblicherweise Laserimpulse werden vorzugsweise im Infrarotbereich ausgestrahlt. Es ist möglich sie auch im sichtbaren Bereich auszusenden. Entsprechend sind bzgl. des gewünschten Lichts die Emitter also bspw. die Laser und auch die Empfänger also üblicherweise Photodioden auszulegen, so dass die ausgestrahlte Licht auch von den Empfängern empfangen werden kann. Bei den Lasern handelt es sich vorzugsweise um Halbleiterlaser, die aus Verbindungshalbleitern hergestellt werden. Die Laserimpulse werden mit einer bestimmten Frequenz bzw. Periode ausgestrahlt, die eine Messung von 300m entfernten Objekten erzeugt.

Solch ein lichtempfindlicher Empfänger ist demnach ein Wandler, der die Lichtimpulse in ein elektrisches Signal wandelt. Dabei werden die Photonen des Lichtimpulses von dem Lichtempfänger in einen elektrischen Strom gewandelt. Wie aus den abhängigen Ansprüchen hervorgeht, ist als Empfänger üblicherweise ein Feld von Einzelphotonen-Lawinendioden (SPAD = Single Photon Avalanche Diode) vorgesehen, das vorzugsweise spaltenweise oder zeilenweise in Abhängigkeit von einem Signal einer Senderschaltung aktivierbar ist. D. h. dass in diesem Bespiel ein Laserarray ebenfalls spaltenweise oder zeilenweise angesteuert wird und die entsprechende Spalte oder Zeile im Photodioden-Array also dem Empfänger ausgewählt wird. Damit ist ein Abscannen der Umgebung möglich. Konkret heißt das, dass, wenn die erste Spalte im Laserarray die Lichtimpulse aussendet, dann die erste Spalte oder Zeile im Photodioden-Array derart angesteuert wird, dass nur diese erste Spalte oder Zeile für den Empfang der am Objekt reflektierten Lichtimpulse bereit ist.

Das elektrische Signal, ein Impuls oder eine Impulsfolge, oder ein anders geartetes Signal, das die Information über die empfangenen Lichtimpulse aufweist, wird einer Auswerteschaltung zugeführt. Nach einer entsprechenden Vorverarbeitung kommt dieses elektrische Signal in eine zeitkorrelierte Photonenzählung mit wenigstens einem Histogramm, um über die Flugzeit der Lichtimpulse eine Entfernung zwischen der Empfängeranordnung und dem wenigstens ein Objekt, das die Lichtimpulse reflektiert, zu bestimmen. In dem Histogramm, wobei es auch mehrere sein können, das in einem Speicher abgelegt ist, werden die Photonen und damit das entsprechende elektrische Signal zu einzelnen Zeiten, die mit der Auswerteschaltung ermittelt werden und dabei insbesondere mit der zeitkorrelierten Photonenzählung, abgelegt. Durch viele Messungen pro Periode, in der ein Lichtimpuls oder ein Paket von Lichtimpulsen abgestrahlt wird, kann dann mit einer Maximumsuche die Zeit ermittelt werden, die am häufigsten vorkommt und die dann als Time-of-flight als Flugzeit verwendet wird. Daraus kann dann in einfacher Art und Weise über die Lichtgeschwindigkeit die Entfernung bestimmt werden.

Wie aus den abhängigen Ansprüchen hervorgeht, kann für die zeitkorrelierte Photonenzählung mindestens eine Zeit-Digital-Wandlung (Time to Digital Converter) verwendet werden. Mit dieser Schaltung wird also jedem elektrischen Signal eine entsprechende Zeit zugeordnet und diese wird dann im Histogramm abgelegt.

Diese zeitliche Auflösung ist entsprechend der räumlichen Auflösung. Erfindungsgemäß wurde nun erkannt, dass die räumliche Auflösung für größere Entfernungen reduziert werden kann. Dies liegt daran, dass die Auflösung nur derart gröber wird, dass die Senkung der Auflösung für die Entfernungsbestimmung bei diesen Entfernungen keine Rolle mehr spielt. Bspw. kann damit die Reduktion der Auflösung der Entfernungsbestimmung und damit der zeitlichen Auflösung durch den Faktor 2, die Speicherkosten um die Hälfte reduziert werden. Bspw. ist die typische zeitliche Auflösung für eine Zeit-Digital-Wandlung 125 ps. Verdoppelt man dies, ist die zeitliche Auflösung bei 250 ps.

Bei der zeitkorrelierten Photonenzählung werden einzelne Photonen der Lichtimpulse detektiert und gezählt und in ein Histogramm eingetragen und zwar an welcher Stelle, in zeitlicher Hinsicht gesehen, das oder die Photonen auftreten. Das Aussenden des Lichtimpulses und die Zählung werden viele Male wiederholt. Dadurch gelingt eine sehr genaue Zeitmessung des Laserimpulses. Bspw. wird ein Objekt von einer Sendeeinrichtung mit vielen Photonen getroffen, die dann durch die Empfängeranordnung empfangen werden. Durch das häufige Wiederholen dieser Photonenbestimmung ist es möglich, den Lichtimpuls bzgl. seiner Flugzeit genau zu bestimmen. Dafür kann bspw. eine Analog-Digital-Wandlung verwendet werden und insbesondere werden die gemessenen Photonenzeiten in ein Histogramm in einem Speicher eingetragen und dann am Ende durch eine Logik wird das Maximum festgestellt. Vorliegend ist eine vorteilhafte Ausgestaltung der Erfindung, einen schnellen Analog-Digital-Wandler mit einer zeitlichen Auflösung von 500MHz bis 2 GHz zu verwenden. Dies kann kostengünstig mit einem sogenannten logarithmischen Flash-Analog-Digital-Wandler verwirklicht werden. Hierbei wird eine Spannung auf eine Serienschaltung von Widerständen gelegt, wobei an den Widerständen Eingänge zu Komparatoren geschaltet sind. Solch eine Serienschaltung wird im Englischen mit voltage ladder bezeichnet.

Ein Vorteil dieser Methode ist, dass mit der zeitkorrelierten Photonenzählung schwache Empfangssignale von weit entfernten Objekten detektiert werden können. Durch die mehrfache Wiederholung der Messung und Akkumulierung in einem Histogramm kann das Nutzsignal gegenüber dem störenden Umgebungslicht angehoben werden, allerdings ist die Realisierung einer hohen Abtastrate in der Größenordnung 10 GHz derzeit nicht kostengünstig realisierbar.

Die Auswerteschaltung soll die Auflösung wie oben dargestellt ab mindestens einer vorbestimmten Entfernung absenken. Dies kann gesteuert sein, d. h. es ist bereits vorgegeben, dass es zu gewissen Zeiten für eine gewisse Dauer einfach erfolgt und somit dann kürzere Entfernungen in diesem Zeitabschnitt nicht erkannt werden, oder es ist möglich, dies adaptiv durchzuführen, d. h. durch eine zumindest Abschätzung der Entfernung kann die Auflösung herunter geschaltet werden oder auch dann wieder erhöht werden, wenn sich ein Objekt nähert. Die Auswerteschaltung kann als integrierter Halbleiterbaustein bspw. aus Silizium oder aus verschiedenen Halbleiterbausteinen oder auch in Kombination mit diskreten elektrischen und elektronischen Bausteinen bestehen.

Bei dem Objekt kann es sich üblicherweise um ein anderes Fahrzeug, einen Fußgänger, ein feststehendes Objekt, wie ein Stein, ein Verkehrszeichen usw. handeln.

Mit dem Startsignal für die Emission der Lichtimpulse ist ein Signal bezeichnet, dass von einer Senderschaltung, die die Laser für die Emission der Lichtimpulse aufweist, an die Empfängeranordnung übertragen wird und zwar dann, wenn die Emission der Lichtimpulse stattfindet, d.h. der zeitliche Nullpunkt für die Flugzeit der Lichtimpulse ist damit durch dieses Startsignal gekennzeichnet. Dieses Startsignal kann elektrisch ausgeführt sein und demnach über entsprechende Schnittstellen an die Empfängeranordnung übertragen werden. Eine Alternative ist die Nutzung des emittierten Lichts, d.h. das ausgesendete Licht wird auch direkt an die Empfängeranordnung gekoppelt und dort dann in ein elektrisches Startsignal gewandelt. Die Information des Startsignals kann digital oder analog moduliert sein.

Mit der Senkung der Auflösung der Entfernungsbestimmung ist gemeint, dass wie oben dargestellt die kleinste zeitliche Auflösung erhöht wird, d. h. anstatt wie oben dargestellt 125 ps sind es dann 250 ps. Dies entspricht dann einer Senkung der räumlichen Auflösung, da es sich um die Lichtgeschwindigkeit, mit der die Lichtimpulse sich bewegen, handelt, entsprechen 125 ps einer räumlichen Auflösung von 1,88 cm und 250 ps von 3,75 cm. Verdoppelt man noch einmal die zeitliche Auflösung, also dass nur noch 500 ps aufgelöst werden können, verschlechtert sich die räumliche Auflösung auf 7,5 cm. Insbesondere im Straßenverkehr ist eine Entfernung von 300 m abzudecken. Dies entspricht bei Lichtgeschwindigkeit einer Messzeit von 2000 ns also 2 µs. Das ist die Länge der oben genannten Periode. Die Länge eines Impulses liegt bei 200 ns. In dieser Zeit, den 2µs, können die Messungen im Histogramm abgelegt werden.

Die Auswerteschaltung kann ein integrierter Schaltkreis aus Silizium sein, sie kann aber auch aus verschiedenen Halbleiterbausteinen, aus diskreten Bauelementen oder Kombinationen daraus bestehen. Teile der Signalverarbeitung können insbesondere auch durch Software, die auf der Auswerteschaltung läuft, erledigt werden.

Aus den abhängigen Ansprüchen ergeben sich weitere vorteilhafte Ausführungen der in den unabhängigen Patentansprüchen angegebenen Empfängeranordnung bzw. dem LiDAR-Modul bzw. dem Verfahren zum Empfangen von Lichtsignalen.

Erfindungsgemäß weist die Auswerteschaltung eine Steuerung auf, die für vorbestimmte Zeitabschnitte einen Takt für die Bestimmung der Entfernung aus dem elektrischen Signal senkt. Durch diese Taktabsenkung wird die zeitliche und damit räumliche Auflösung wie oben dargestellt abgesenkt. Diese Steuerung kann bspw. ein Softwarebefehl, ein Signal sein, dass bspw. die Zeit-Digital-Wandlung mit einem halbierten Takt versorgt oder dafür sorgt, dass dieser heruntergeschaltet wird. Dieses Signal kann bspw. von einem anderen Baustein der Auswerteschaltung oder von außerhalb der Auswerteschaltung kommen.

Weiterhin ist erfindungsgemäß vorgesehen, dass die Auswerteschaltung wenigstens einen Zeit-Digital-Wandler für zeitkorrelierte Photonenzählung aufweist, wobei die Steuerung den Takt des wenigstens ein Zeit-Digital-Wandler senkt. Eine Zeit-Digital-Wandlung ist ein Verfahren, um eine Zeit beispielsweise zwischen zwei Impulsen zu bestimmen und in ein Digitalwort umzusetzen. Dazu kann bspw. ein Zähler verwendet werden, der durch ein Start- und ein Stoppsignal bspw. des empfangenen Lichtimpulses bzw. des ausgesendeten Lichtimpulses aktiviert wird. Um den Fehler zu Beginn und zu Ende des durch den Zähler ermittelten Zählerstandes zu bestimmen, wird eine sogenannte Interpolation verwendet. Dazu kann eine Verzögerungsschaltung verwendet werden. Es ist jedoch auch möglich, zwei zueinander verstimmte Oszillatoren zu verwenden oder eine sogenannte Überabtastung bspw. eine Vierfach-Überabtastung zu verwenden und damit das Signal abzutasten. Durch den Zählerstand und die Werte, die aus der Interpolation gewonnen werden zu Beginn der Zählung und zu Ende der Zählung, kann dann die Zeit und damit die Flugzeit genau gemessen werden.

Der Vorteil dieser Methode besteht in der hohen zeitlichen Auflösung von ca. 100 ps. Dies entspricht einer Abtastrate von 10 GHz oder einer Distanzmessgenauigkeit von 1,5 cm.

Alternativ ist es möglich, dass der wenigstens eine Zeit-Digital-Wandler seinen Takt behält und dass dann andere unten beschriebene Methoden verwendet werden, um die Auflösung zu senken.

Darüber hinaus ist es vorteilhaft, dass die Auswerteschaltung eine Abtastung aufweist, die aus dem elektrischen Signal Abtastwerte erzeugt, wobei die Auswerteschaltung eine Signalverarbeitung für die Abtastwerte aufweist, die die Abtastwerte zusammenfasst, um die Senkung der Auflösung der Entfernungsbestimmung zu erreichen. Demnach ist es möglich, das elektrische Signal zu digitalisieren oder zumindest entsprechende Impulse, die vorliegend Abtastwerte darstellen, zu erzeugen, wobei diese Abtastwerte dann zusammengefasst werden, was einer Absenkung der Auflösung der Entfernungsbestimmung entspricht, da dann nicht mehr diese beiden Abtastwerte aufgelöst werden können. Wie dargestellt können sowohl die Auswerteschaltung, die Signalverarbeitung und andere Komponenten softwaretechnisch und/oder hardwaretechnisch realisiert sein.

Erfindungsgemäß legt die Auswerteschaltung pro Lichtimpuls 100 bis 150, vorzugsweise 130, Messungen im Histogramm abl. Wie oben dargestellt, wird vorliegend beispielhaft von einer Messzeit von 2000 ns ausgegangen, wenn man eine Maximalentfernung für die Entfernungsbestimmung von 300 m annimmt. Dann werden bspw. pro Lichtimpuls 100 bis 150 und vorzugsweise 130 Messungen im Histogramm abgelegt, um die Entfernung des Objekts über die Flugzeit zu bestimmen.

Es ist vorteilhaft, dass der Empfänger ein Feld aus Einzelphotonen-Lawinendioden (SPAD = Single Photon Avalanche Diode) aufweist, das spaltenweise oder zeilenweise in Abhängigkeit von einem Signal einer Senderschaltung aktivierbar ist. Vorliegend wird davon ausgegangen, dass ein Abscannen der Umgebung, also ein Abtasten der Umgebung, um ein Fahrzeug durch eine spaltenweise oder zeilenweise Ansteuerung von Lasern in einem Laserarray erreicht wird und entsprechend eine spaltenweise oder zeilenweise Ansteuerung oder Aktivierung der SPADs in deren Array erfolgt. D.h. wird die erste Spalte im Laserarray aktiviert, wird auch die erste Spalte im SPAD-Array aktiviert. Vorteilhafterweise kennzeichnet dieses der Senderschaltung das Versenden des Lichtimpulses. Damit wird eine Synchronisierung der Aktivierung der Spalte der SPAD erreicht. Zu beachten ist, dass bspw. eine Rauschschwelle vorgesehen ist, damit Umgebungslicht oder Streulicht, das nicht von den Lichtimpulsen stammt, ausgefiltert wird. Damit sind letztlich mehr als ein Photon notwendig, um ein elektrisches Signal zu erzeugen, das erfindungsgemäß in der Auswerteschaltung weiterverarbeitet wird. Die Rauschschwelle ist elektronisch vorgesehen.

In der nachfolgenden Beschreibung werden Ausführungsbeispiele der Erfindung dargestellt und durch die Figuren anhand von Ausführungsbeispielen erläutert.

Es zeigen:
Fig. 1 eine beispielhafte Konfiguration von LiDAR-Modulen in einem Fahrzeug,
Fig. 2 eine Darstellung als Blockschaltbild eines LiDAR-Moduls mit der erfindungsgemäßen Empfängerschaltung,
Fig. 3 einen Schaltungsausschnitt der erfindungsgemäßen Empfängerschaltung und
Fig. 4 ein Flussdiagramm des erfindungsgemäßen Verfahrens,
Fig. 5 eine Darstellung des Objekts und mit verschiedenen Entfernungen im Vergleich zum Fahrzeug und
Fig. 6 eine Tabelle, die die Zuordnung der zeitlichen und räumlichen Auflösung für das Histogramm darstellt.

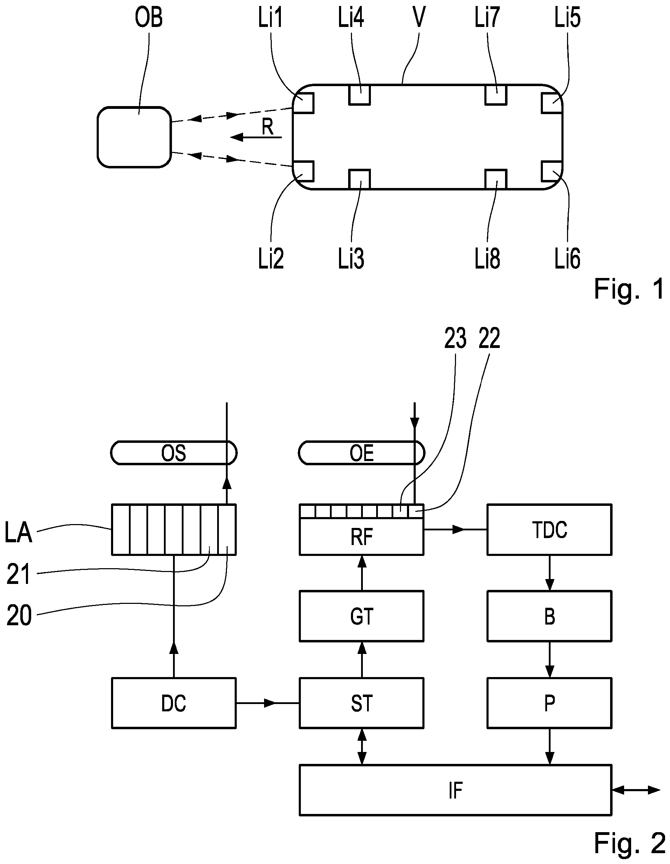

Fig. 1 zeigt ein Fahrzeug V, das sich in die Richtung R bewegt. Das Fahrzeug V weist die LiDAR-Module Li1 bis Li8 auf. Diese LiDAR-Module erfassen die Umgebung des Fahrzeugs V. Daher wird das Objekt OB durch das LiDAR-Modul Li1 erfasst. Durch eine Entfernungsbestimmung und entsprechende Charakterisierung anhand der Bewegungsparameter des Objekts ist es möglich, auf eine mögliche Kollision zu schließen und entsprechende Bewegungen des Fahrzeugs V zu beeinflussen, um nicht mit dem Objekt OB zu kollidieren.

Die LiDAR-Module Li1 bis Li8 weisen eine erfindungsgemäße Empfängeranordnung auf und eine Sendereinrichtung, die wie oben beschrieben mit einem Laserarray die Laserimpulse versendet, um die am Objekt OB reflektierten Laserimpulse dann mit einem SPAD-Array zu empfangen und dann entsprechend mit der zeitkorrelierten Photonenzählung auszuwerten, um die Entfernung zwischen dem Objekt OB und dem Fahrzeug V zu bestimmen. Dafür wird die Time-of-Flight-Methode verwendet.

Fig. 2 beschreibt in einem Blockschaltbild ein erfindungsgemäßes LiDAR-Modul mit der erfindungsgemäßen Empfängeranordnung. Die Sendereinrichtung weist ein Laserarray LA auf mit Spalten oder Zeilen 20, 21 usw. Wie oben dargestellt, werden diese Spalten oder Zeilen 20, 21 einzeln angesteuert. Damit wird ein Abtasten der Umgebung des Fahrzeugs V erreicht. Eine Optik OS parallelisiert üblicherweise die von dem Laserarray LA abgegebenen Laserstrahlen der Spalte oder der Zeile vorliegend 20. Es sind jedoch auch andere Konfigurationen für diese Optik möglich.

Das Laserarray LA wird durch einen Baustein DC angetrieben, der entsprechend einen Treiber und eine Steuerung für das Laserarray LA aufweist. Damit werden die Laser im Laserarray in den gewünschten Betriebspunkten betrieben und zur Emission der Laserstrahlen veranlasst.

Dieser Baustein DC gibt auch ein Signal an die Empfängeranordnung ab und dabei an die Steuerung ST. In der Empfängeranordnung liegt ein sogenanntes Front-End RF vor, das vorzugsweise beispielhaft das SPAD-Array aufweist, das ebenfalls Spalten oder Zeilen 22, 23 usw. aufweist. Hier werden entsprechend die einzelnen Spalten oder Zeilen angesteuert. Dargestellt ist hier, da die erste Spalte oder Zeile im Laserarray LA 20 angesteuert wurde, dass hier nun auch die erste Spalte oder Zeile 22 des SPAD-Arrays angesteuert wird. Auch hier ist eine Optik OE vorgesehen, die die empfangenen Lichtimpulse für die einzelnen Spalten parallelisiert. Im Empfänger-Front-End RF werden dann aus den empfangenen Lichtimpulsen durch die SPADs entsprechende elektrische Signale erzeugt. Diese Signale werden aufbereitet, wobei dabei einzelne SPADs zu sogenannten Makro-SPADs zusammengefasst werden. Damit wird die Signalverarbeitung vereinfacht und es muss nicht für jede Diode SPAD ein eigener Empfänger bzw. eine eigene Auswerteschaltung vorgesehen sein.

Das elektrische Signal wird danach einer Zeit-Digital-Wandlung TDC zugeführt, um die zeitkorrelierte Photonenzählung durchzuführen. Das Empfänger-Front-end RF wird von einem Baustein GT angesteuert, um die entsprechende Spalte im SPAD-Array anzusteuern. Der Baustein GT erhält dieses Signal von der Steuerung der Empfängerschaltung ST. Die Steuerung ST ist auch über die Schnittstelle IF mit der Außenwelt im Fahrzeug verbunden, d. h. es empfängt Signale und sendet auch Signale über diese Schnittstelle IF zu anderen Komponenten bspw. zu Auswertesteuergeräten usw.

Die Zeit-Digital-Wandlung TDC führt in der oben beschriebenen Weise über die zeitkorrelierte Photonenzählung in einem Histogramm die Entfernungsbestimmung durch. Dies kann evtl. in einem Buffer B zwischengespeichert werden oder auch nicht und wird in einem Verarbeitungsbaustein P weitergeführt, wo alle notwendigen Berechnungen durchgeführt werden, um aus den gemessenen Daten Entfernungsdaten und die dazugehörigen Qualitätsdaten zu ermitteln. Über das Interface IF werden die Daten zur weiteren Verarbeitung ausgegeben. Außerdem erfolgt eine Parametrierung des Chipsatzes über das Interface IF.

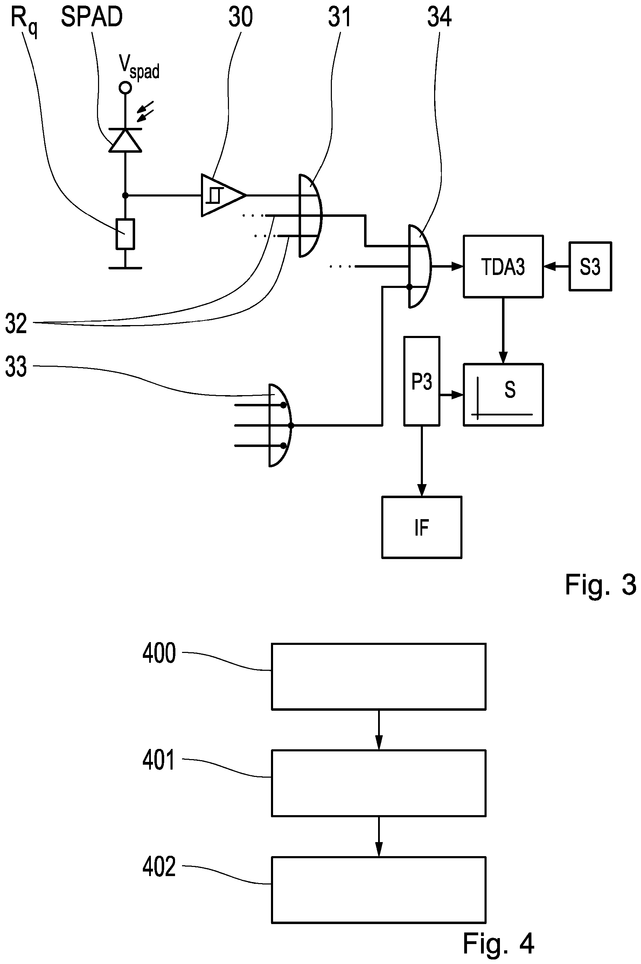

Fig. 3 zeigt einen Teil der Schaltung der erfindungsgemäßen Empfängeranordnung. Beispielhaft ist hier lediglich eine Photodiode SPAD dargestellt, die entsprechend mit der Vorspannung SPAD beaufschlagt wird. Über den Quenchwiderstand RQ erfolgt das sogenannte Quenching: Der Lawineneffekt wird gedrosselt und letztlich gestoppt, vorliegend durch den Widerstand RQ. Auch dies geschieht in einer Zeit, die sehr viel kleiner als 1 ns ist. Dieses Quenchen ist notwendig, um die Selbstzerstörung der Photodiode zu verhindern. Das Quenchen mit einem Widerstand, was am häufigsten verwendet wird, wird als passives Quenchen bezeichnet. Es gibt noch kompliziertere Ausgestaltungen, die dann entsprechend genannt werden.

Das elektrische Ausgangssignal der Diode SPAD wird dem Impulsverlängerer 30 zugeführt. Dieses Ausgangssignal wird in einem OR-Glied 31 mit anderen Ausgangssignalen 32 anderer Dioden der gleichen Spalte verknüpft. Damit wird eine sogenannte Makrodiode oder ein Makroempfänger hergestellt. Dies geschieht auch mit anderen Dioden dieser Spalte symbolisch dargestellt durch das OR-Glied 33. Es können noch weitere OR-Glieder vorgesehen sein. Diese OR-glieder werden wiederum mit einem weiteren OR-Glied 34 verknüpft. Das Gesamtsignal wird dann der Zeit-Digital-Wandlung TDA3 zugeführt. Die TDA3 wandelt die Impulssignale in Zeitsignale um, die dann ins Histogramm S eingetragen werden können. Im Histogramm S werden dann pro Messzeit, wie oben dargestellt bspw. 2 ms 130 Messungen eingetragen. Durch eine Maximumsuche wird die Zeit festgestellt, die für diesen Lichtimpuls zuzuordnen ist. Daraus wird dann über P3 die Entfernung bestimmt. Diese Entfernung kann dann über die Schnittstelle IF versendet werden. Die Zeit-Digital-Wandlung TDA3 kann durch einen Baustein S3, der auch ein Softwarebaustein sein kann, derart beeinflusst, dass der Takt abgesenkt wird. Dies senkt die zeitliche Auflösung und damit Entfernungsauflösung in der oben beschriebenen Weise. Damit wird Speicher im Speicher S eingespart insbesondere eben für die vorbestimmten Entfernungen, ab denen diese Senkung der Auflösung stattfinden soll. Alternativ ist es möglich, dass die Senkung im Baustein S durch den Baustein P3 durchgeführt wird, in dem bspw. ein Bitshift durchgeführt wird oder eben auch Abtastwerte zusammengefasst werden.

Fig. 4 zeigt das Flussdiagramm als Beispiel für das erfindungsgemäße Verfahren. In Verfahrensschritt 400 erfolgt die Wandlung der Lichtimpulse in das elektrische Signal, das dann in Verfahrensschritt 401 über die zeitkorrelierte Photonenzählung zur Entfernungsbestimmung verwendet wird. In Verfahrensschritt 402 erfolgt eine Absenkung der zeitlichen Auflösung und damit der räumlichen Auflösung, wenn die Entfernung einen vorbestimmten Wert bspw. 100 oder 150 m oder 175 m erreicht.

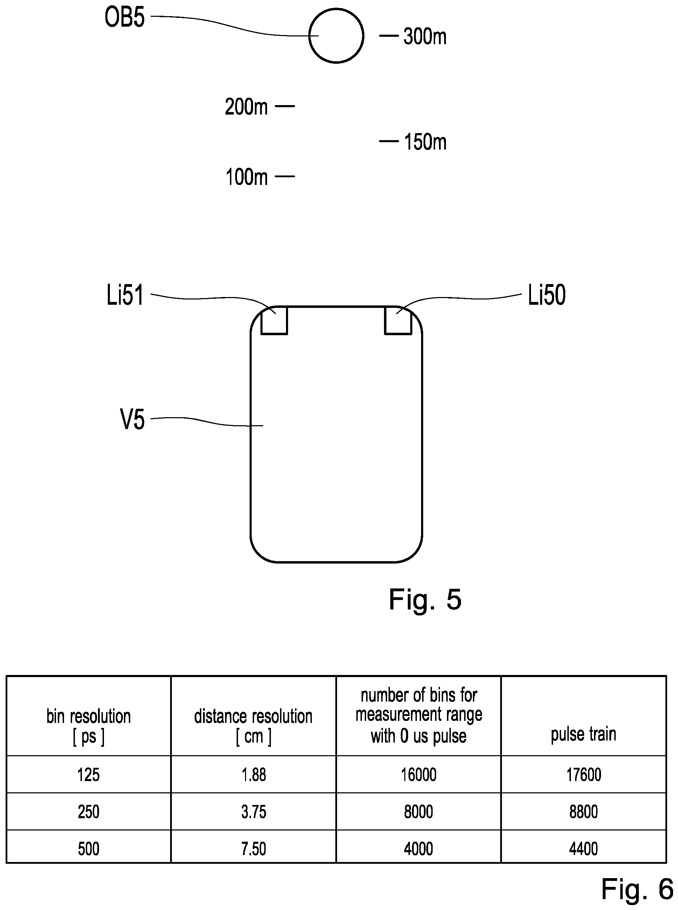

Fig. 5 zeigt eine Situation, in der sich ein Objekt OB5 in einer Entfernung von 300 m vom Fahrzeug V5 aufhält. Das Fahrzeug V5 hat an der Fahrzeugfront 2 LiDAR-Module Li50 und Li51. Das Objekt OB5 ist nun in einer Entfernung in der eine Absenkung der zeitlichen Auflösung von Lichtimpulsen, die von diesen LiDAR-Modulen Li50 und Li51 ausgesendet wurden, erfolgt. Aber auch bei den anderen Entfernungen 100 m, 150 und 200 m kann eine schrittweise Senkung der Auflösung der Entfernungsbestimmung erfolgen.

Fig. 6 zeigt in einer Tabelle eine bespielhafte Zuordnung von zeitlicher Auflösung und räumlicher Auflösung. In der Spalte ist die zeitliche Auflösung pro Element im Histogramm, das mit dem englischen Wort Bin bezeichnet wird, dargestellt. Es sind die Werte von oben 125, 250 und 500 ps angegeben. Dies entspricht einer Entfernungsauflösung in Zentimetern in der zweiten Spalte von 1,88, 3,75 und entsprechend 7,5 cm. Für den gesamten Messabschnitt werden bei einer Auflösung pro Bin von 125 ps in der dritten Spalte 16000 Bins benötigt. Entsprechend bei einer Halbierung dann nur noch 8000 und einer weiteren dann nur noch 4000. Dies zeigt die offensichtlichen Vorteile, die in Bezug auf den Speicherbedarf erreicht werden können. Nimmt man noch die Impulsfolge hinzu erhöht sich dies wie in der vierten Spalte dargestellt auf die Werte 17600, 8800 und 4400.

### Bezugszeichen

- V, V5: Fahrzeug
- R: Richtung
- Li1-8: LiDAR-Module
- OB, OB5: Objekt
- LA: Laserarray
- 20, 21: Spalten des Laserarray
- OS: Optik
- DC: Baustein
- ST: Steuerung
- RF: Front-End
- 22, 23: Spalten des SPAD-Array
- OE: Optik
- TDC: Zeit-Digitalwandlung
- GT: Baustein
- IF: Schnittstelle
- P: Verarbeitungsbaustein
- RQ: Quenchwiderstand
- 30: Impulsverlängerer
- 31, 33, 34: OR-Glied
- 32: Ausgangssignale
- TDA3: Zeit-Digitalwandlung
- S: Speicher für das Histogramm
- P3: Auswertung
- S3: Baustein
- 400,401,402: Verfahrensschritte
- Li50, 51: LiDAR-Module

## Patentansprüche

1. Empfängeranordnung zum Empfang von Lichtimpulsen mit:
- wenigstens einem lichtempfindlichen Empfänger (SPAD), der die Lichtimpulse in ein elektrisches Signal wandelt.
- einer an den Empfänger angeschlossenen Auswerteschaltung, die aus dem elektrischen Signal mittels zeitkorrelierter Photonenzählung mit wenigstens einem Histogramm über eine Flugzeit der Lichtimpulse und in Abhängigkeit von einem Startsignal für die Lichtimpulse eine Entfernung zwischen der Empfängeranordnung und dem wenigstens einem Objekt (OB), das die Lichtimpulse reflektiert, bestimmt, wobei die Auswerteschaltung derart konfiguriert ist, dass die Auswerteschaltung ab zumindest einer vorbestimmten Entfernung eine Senkung einer Auflösung der Entfernungsbestimmung vornimmt,
**dadurch gekennzeichnet, dass**
die Auswerteschaltung eine Steuerung (ST) aufweist, die für vorbestimmte Zeitabschnitte einen Takt für die Bestimmung der Entfernung aus dem elektrischen Signal senkt,
wobei die Auswerteschaltung wenigstens einen Zeit-Digital-Wandler für die zeitkorrelierte Photonenzählung aufweist, wobei die Steuerung (ST) den Takt des wenigstens einen Zeit-Digital-Wandlers (TDC) senkt, und
wobei die Auswerteschaltung pro Lichtimpuls 100 bis 150, vorzugsweise 130, Messungen im Histogramm ablegt.

2. Empfängeranordnung nach Anspruch 1, **dadurch gekennzeichnet, dass** die Auswerteschaltung eine Abtastung aufweist, die aus dem elektrischen Signal Abtastwerte erzeugt, wobei die Auswerteschaltung eine Signalverarbeitung für die Abtastwerte aufweist, die Abtastwerte zusammenfasst, um die Senkung der Auflösung der Entfernungsbestimmung zu erreichen.

3. Empfängeranordnung nach einem der vorhergehenden Ansprüche, **dadurch gekennzeichnet, dass** der Empfänger ein Feld von Einzelphotonen Lawinendioden (SPAD) aufweist, das spaltenweise oder zeilenweise in Abhängigkeit von einem Signal einer Senderschaltung aktivierbar ist.

4. LiDAR-Modul (Li1-8) mit einer Empfängeranordnung nach einem der Ansprüche 1 bis 3 und einer Senderschaltung, die ein Laserarray (LA) aufweist, wobei das Laserarray (LA) spaltenweise oder zeilenweise aktivierbar ist und das Startsignal die Emission der Lichtimpulse durch eine Spalte (20, 21) oder eine Zeile kennzeichnet, wobei durch das Signal die entsprechende Spalte (20, 21) oder Zeile im Feld des Empfängers aktiviert ist.

5. Verfahren zum Empfangen von Lichtimpulsen in folgenden Schritten:
- Wandeln der Lichtimpulse in ein elektrisches Signal durch einen lichtempfindlichen Empfänger (SPAD).
- Bestimmen einer Entfernung zwischen einer Empfängerschaltung und wenigstens einem Objekt (OB), das die Lichtimpulse reflektiert, aus dem elektrischen Signal durch eine zeitkorrelierte Photonenzählung mit wenigstens einem Histogramm über eine Flugzeit der Lichtimpulse und in Abhängigkeit von einem Startsignal für eine Emission der Lichtimpulse.
- Vornehmen einer Absenkung einer Auflösung der Entfernungsbestimmung ab zumindest einer vorbestimmten Entfernung,
**dadurch gekennzeichnet, dass**
ein Takt für die Bestimmung der Entfernung aus dem elektrischen Signal für vorbestimmte Zeitabschnitte mittels einer Steuerung (ST) der Auswerteschaltung gesenkt wird,
wobei die Auswerteschaltung wenigstens einen Zeit-Digital-Wandler für die zeitkorrelierte Photonenzählung aufweist, wobei die Steuerung (ST) den Takt des wenigstens einen Zeit-Digital-Wandlers (TDC) senkt, und wobei die Auswerteschaltung pro Lichtimpuls 100 bis 150, vorzugsweise 130, Messungen im Histogramm ablegt.

## Claims

1. Receiver arrangement for receiving light pulses with:
- at least one light-sensitive receiver (SPAD) which converts the light pulses into an electrical signal.
- an evaluation circuit connected to the receiver, which determines a distance between the receiver arrangement and the at least one object (OB) that reflects the light pulses from the electrical signal by means of time-correlated photon counting with at least one histogram over a flight time of the light pulses and depending on a start signal for the light pulses, wherein the evaluation circuit is configured such that the evaluation circuit performs a reduction in the resolution of the distance determination from at least a predetermined distance,
**characterized in that**
the evaluation circuit has a controller (ST) which reduces a cycle rate for determining the distance from the electrical signal for predetermined time segments,
wherein the evaluation circuit has at least one time-to-digital converter for the time-correlated photon counting, wherein the controller (ST) reduces the cycle rate of the at least one time-to-digital converter (TDC), and
wherein the evaluation circuit stores 100 to 150, preferably 130 measurements per light pulse in the histogram.

2. Receiver arrangement according to claim 1, **characterized in that** the evaluation circuit has a sampling which generates sampled values from the electrical signal, wherein the evaluation circuit has a signal processing for the sampled values that combines the sampled values in order to achieve a reduction of the resolution of the distance determination.

3. Receiver arrangement according to one of the preceding claims, **characterized in that** the receiver has an array of single photon avalanche diodes (SPAD) which can be activated column by column or row by row depending on a signal of a transmitter circuit.

4. LiDAR module (Li1-8) with a receiver arrangement according to one of claims 1 to 3 and a transmitter circuit having a laser array (LA), wherein the laser array (LA) can be activated column by column or row by row and the start signal characterizes the emission of the light pulses by a column (20, 21) or a row, wherein the corresponding column (20, 21) or row is activated by the signal in the field of the recipient.

5. Method for receiving light pulses in the following steps:
- conversion of the light impulses into an electrical signal by a light-sensitive receiver (SPAD).
- determination of a distance between a receiver circuit and at least one object (OB), which reflects the light pulses, from the electrical signal by a time-correlated photon count with at least one histogram over a flight time of the light pulses and depending on a start signal for an emission of the light pulses.
- carrying out a reduction of a resolution of the distance determination from at least a predetermined distance,
**characterized in that**
a cycle rate for determining the distance from the electrical signal for predetermined time segments is reduced by a controller (ST) of the evaluation circuit,
wherein the evaluation circuit has at least one time-to-digital converter for the time-correlated photon counting, wherein the controller (ST) reduces the cycle rate of the at least one time-to-digital converter (TDC), and wherein the evaluation circuit stores 100 to 150, preferably 130 measurements per light pulse in the histogram.

## Revendications

1. Dispositif récepteur destiné à la réception d'impulsions lumineuses, comportant :
- au moins un récepteur photosensible (SPAD) qui convertit les impulsions lumineuses en un signal électrique,
- un circuit d'exploitation raccordé au récepteur et qui, à partir du signal électrique, au moyen d'un comptage de photons à corrélation temporelle, à l'aide d'au moins un histogramme, par l'intermédiaire d'un temps de vol des impulsions lumineuses et en fonction d'un signal de départ pour les impulsions lumineuses, détermine une distance entre le dispositif récepteur et l'au moins un objet (OB) qui reflète les impulsions lumineuses, le circuit d'exploitation étant configuré de manière à ce que le circuit d'exploitation, à partir d'au moins une distance prédéfinie, procède à une diminution d'une définition de la détermination de distance,
**caractérisé en ce que**
le circuit d'exploitation présente une commande (ST) qui, pour des tranches temporelles prédéfinies, diminue une cadence pour la détermination de la distance à partir du signal électrique,
le circuit d'exploitation présentant au moins un convertisseur temps-numérique pour le comptage de photons à corrélation temporelle, la commande (ST) diminuant la cadence de l'au moins un convertisseur temps-numérique (TDC), et
le circuit d'exploitation enregistrant par impulsion lumineuse 100 à 150, de préférence 130 mesures, dans l'histogramme.

2. Dispositif récepteur selon la revendication 1, **caractérisé en ce que** le circuit d'exploitation présente un système de balayage qui, à partir du signal électrique, génère des valeurs de balayage, le circuit d'exploitation présentant pour les valeurs de balayage un système de traitement de signaux qui regroupent les valeurs de balayage afin d'atteindre la diminution de la définition de la détermination de distance.

3. Dispositif récepteur selon une des revendications précédentes, **caractérisé en ce que** le récepteur présente un champ de diodes à avalanche à photon unique (SPAD) qui est activable par colonne ou par ligne en fonction d'un signal d'un circuit émetteur.

4. Module LIDAR (Li1-8) comportant un dispositif récepteur selon une des revendications 1 à 3 et un circuit émetteur qui présente une matrice laser (LA), la matrice laser (LA) étant activable par colonne ou par ligne et le signal de départ identifiant l'émission des impulsions lumineuses par une colonne (20, 21) ou une ligne, la colonne correspondante (20, 21) ou la ligne étant activée dans le champ du récepteur par le signal.

5. Procédé de réception d'impulsions lumineuses par les étapes suivantes :
- conversion des impulsions lumineuses en un signal électrique par un récepteur photosensible (SPAD),
- détermination d'une distance entre un dispositif récepteur et au moins un objet (OB) qui reflète les impulsions lumineuses à partir du signal électrique par un comptage de photons à corrélation temporelle à l'aide d'au moins un histogramme par l'intermédiaire d'un temps de vol des impulsions lumineuses et en fonction d'un signal de départ pour une émission des impulsions lumineuses,
- réalisation d'une diminution d'une définition de la détermination de distance à partir d'au moins une distance prédéfinie,
**caractérisé en ce**
**qu'**une impulsion pour la détermination de la distance à partir du signal électrique est diminuée pour des tranches temporelles prédéfinies au moyen d'une commande (ST) du circuit d'exploitation,
le circuit d'exploitation présentant au moins un convertisseur temps-numérique pour le comptage de photons à corrélation temporelle, la commande (ST) diminuant l'impulsion de l'au moins un convertisseur temps-numérique (TDC), et le circuit d'exploitation enregistrant par impulsion lumineuse 100 à 150, de préférence 130 mesures, dans l'histogramme.
